(19) Europäisches Patentamt
European Patent Office
Office européen des brevets

(11) Veröffentlichungsnummer: **0 022 216 B2**

(12) # NEUE EUROPÄISCHE PATENTSCHRIFT

(45) Veröffentlichungstag der neue Patentschrift: **24.08.94**

(51) Int. Cl.5: **C08L 67/03**, //(C08L67/03, 55:02)

(21) Anmeldenummer: **80103584.1**

(22) Anmeldetag: **25.06.80**

(54) **Hochschlagzähes Polybutylenterephthalat.**

(30) Priorität: **07.07.79 DE 2927576**

(43) Veröffentlichungstag der Anmeldung: **14.01.81 Patentblatt 81/02**

(45) Bekanntmachung des Hinweises auf die Patenterteilung: **02.11.83 Patentblatt 83/44**

(45) Bekanntmachung des Hinweises auf die Entsheidung über den Einspruch: **24.08.94 Patentblatt 94/34**

(84) Benannte Vertragsstaaten: **BE DE FR GB IT NL SE**

(56) Entgegenhaltungen:

**DE-A- 1 247 665** **DE-A- 1 694 168**
**DE-A- 1 694 173** **DE-A- 1 694 200**
**DE-A- 2 348 377** **DE-A- 2 444 584**
**DE-A- 2 523 010** **DE-A- 2 636 135**
**DE-B- 1 269 360** **US-A- 3 238 275**

**KUNSTSTOFFE vol. 68, 1978, pp. 122ff, H. Dost el al.**

**H. Blackley "Emulsion Polymerisation"; Appl. Science Publishers London, 1975, p. 430**

**HOECHST AG vorläufiges Merkblatt VM 365 "Hostaform S VP 9063 und 9064" 07.1982**

(73) Patentinhaber: **BAYER AG**
**D-51368 Leverkusen (DE)**

(72) Erfinder: **Binsack, Rudolf, Dr.**
**Bethelstrasse 4a**
**D-4150 Krefeld (DE)**
Erfinder: **Rempel, Dieter, Dr-**
**Max-Beckmann-Strasse 35**
**D-5090 Leverkusen (DE)**
Erfinder: **Humme, Gert, Dr.**
**Ackerstrasse 17**
**D-5068 Odenthal (DE)**
Erfinder: **Ott, Karl-Heinz, Dr.**
**Paul-Klee-Strasse 54**
**D-5090 Leverkusen (DE)**

**EP 0 022 216 B2**

## Beschreibung

Die Erfindung betrifft hochschlagzähe Formmassen, bestehend aus Mischungen aus Polybutylenterephthalat und ABS-Pfropfpolymerisat bestimmter Zusammensetzung und eng definierter Teilchengrösse.

Polybutylenterephthalate haben auf dem Gebiet der thermoplastischen Formmassen wegen ihrer wertvollen technologischen Eigenschaften, wie z.B. Steifigkeit, Härte, Abriebfestigkeit, dynamische und thermische Belastbarkeit, schnelle Verarbeitbarkeit, grosse Bedeutung erlangt. Ein Nachteil dieser Formmassen ist ihre nicht immer ausreichende mehraxiale (zweidimensionale) Schlagzähigkeit.

Es existieren zahlreiche Vorschläge, die Zähigkeit thermoplastischer Polyester durch Zumischen oder Einkondensieren anderer Polymerer, insbesondere solcher auf Basis modifizierter Elastomerer und Polyolefine, anzuheben (DE-OS 1 694 173, 1 928 369, DE-AS 1 961 226, 1 962 855, DE-OS 2 248 242, 2 310 034, 2 357 406, 2 364 318, US 3 236 914, 3 723 574). Den vorgeschlagenen Massnahmen haftet jedoch der Nachteil an, dass die Zähigkeitsverbesserung mit einer wesentlichen Verschlechterung anderer, z.B. der oben genannten Eigenschaften einhergeht. Ausserdem wird auch die mehraxiale Schlagzähigkeit nicht im gewünschten Masse erreicht.

Man hat auch schon versucht, die Zähigkeit von Polybutylenterephthalaten durch Zusätze speziell von Acrylnitril/Butadien/Styrol-(ABS)-Pfropfpolymerisaten anzuheben (DE-OS 2 035 390, 2 348 377, JP-Patentanmeldungen 127 689 ≙ 49-097 081, 074 743 ≙ 50-023 448 und 074 744 ≙ 50-023 449). Dabei werden aber entweder die typischen Eigenschaften des Polybutylenterephthalats, wie hohe Wärmeformbeständigkeit, Härte und Steifigkeit zu stark verringert, oder es werden Produkte erhalten, die eine nicht ausreichende mehraxiale Schlagzähigkeit aufweisen.

Überraschenderweise wurde nun gefunden, dass sich die geschilderten Nachteile dadurch beheben lassen, dass man ganz bestimmte ABS-Pfropfpolymerisate, nämlich solche mit einem relativ hohen Gehalt an Pfropfgrundlage und einer eng definierten Teilchengrösse, auswählt.

Gegenstand der Erfindung sind hochschlagzähe Polybutylenterephthalat-Formmassen, bestehend aus Mischungen aus

A. 70-80 Gew.-% Polybutylenterephthalat und

B. 20-30 Gew.-%, ABS-Pfropfpolymerisat,

wobei sich die obigen Prozentangaben auf die Summe A + B beziehen und das Pfropfpolymerisat B durch Pfropfreaktion von

I. 10-40, vorzugsweise 10-35, insbesondere 15-25, Gew.-%, bezogen auf B, eines Gemisches aus

a) 10-35, vorzugsweise 20-35, Gew.-%, bezogen auf die Summe a + b, Acrylnitril und

b) 65-90, vorzugsweise 65-80, Gew.-%, bezogen auf die Summe a + b, Styrol auf

II. 60-90, vorzugsweise 65-90, insbesondere 75-85, Gew.-%, bezogen auf B, eines vernetzten Butadien-Polymerisats mit mindestens 70 Gew.-%, bezogen auf II, Butadienresten als Pfroptgrundlage erhältlich ist,

dadurch gekennzeichnet, dass der Gelanteil der Pfropfgrundlage II $\geqq$ 80% (in Toluol gemessen), der Pfropfgrad G 0,15-0,55 und der mittlere Teilchendurchmesser $d_{50}$ des ABS-Pfropfpolymerisats B 0,4 $\mu$m betragen.

Die Polybutylenterephthalate A enthalten mindestens 90 Mol-%, bezogen auf die Dicarbonsäurekomponente, Terephthalsäurereste und mindestens 90 Mol-%, bezogen auf die Diolkomponente Butandiol-1,4-reste.

Die Polybutylenterephthalate A können neben Terephthalsäureresten bis zu 10 Mol-% Reste anderer aromatischer, aliphatischer oder cycloaliphatischer Dicarbonsäure, z.B. Bernsteinsäure-, Adipinsäure-, Isophthalsäurereste, enthalten; sie können neben Butandiolresten bis zu 10 Mol-% Reste eines anderen Diols enthalten, wobei dieses andere Diol unter die Formel

$$HO\text{-}C_nH_{2n}\text{-}OH$$

worin n eine ganze Zahl von 2 bis 10 bedeutet, fallen kann. Es können insbesondere auch bis zu 10 Mol.-% alkylsubstituierter Diole, wie Neopentylglykol, 2,2,4-Trimethylhexandiol-1,6, 2-Ethylpropandiol-1,3, 2,2,4-Trimethylpentandiol-1,3, 2-Methylpentandiol-2,4, 3-Methylpentandiol-2,4, 2-Ethylhexandiol-1,3 eingebaut werden (DE-OS 2 407 674, 2 407 776, 2 715 932).

Die Polybutylenterephthalate A können auch durch verzweigend wirkende Verbindungen, wie Polycarbonsäuren bzw. Polyole, verzweigt sein (DE-AS 1 900 270).

Die als Komponente A verwendeten Polybutylenterephthalate besitzen im allgemeinen eine Intrinsic-Viskosität von 0,7 bis 1,5dl/g, vorzugsweise 0,8 bis 1,3 dl/g, insbesondere 0,8 bis 1,05 dl/g, gemessen in Phenol/o-Dichlorbenzol (1:1 Gewichtsteile).

Die Pfropfgrundlage II kann neben Butadienresten bis zu 30 Gew.-%, bezogen auf II, Reste anderer $\alpha,\beta$-ethylenisch ungesättigter Monomerer, wie z.B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäss unter Pfropfpolymerisaten auch solche Produkte verstanden, die neben den eigentlichen Pfropfpolymeren auch Homo- und Copolymerisate der eingesetzten Pfropfmonomeren I enthalten. Der Pfropfgrad G bezeichnet das Gewichtsverhältnis von aufgepfropftem Styrol/Acrylnitril : Pfropfgrundlage und ist dimensionslos.

Der mittlere Teilchendurchmesser $d_{50}$ ist der Durchmesser, oberhalb und unterhalb dessen jeweils 50 Gew.-% der Teilchen liegen.

Der mittlere Teilchendurchmesser kann mittels Ultrazentrifugen-Messungen (W. Scholtan, H. Lange, Kolloid. Z. und Z. Polymere 250 [1972], 782-796) oder mittels Elektronenmikroskopie und anschliessender Teilchenauszählung (G. Kämpf, H. Schuster, Angew. Makromolekulare Chemie 14 [1970], 111-129) bestimmt werden.

Die Pfropfpolymerisate B können nach an sich bekannten Methoden, z. B. durch Emulsionspolymerisation oder Latex-Suspensionsverfahren, mit Hilfe von Radikal-bildenden Polymerisationsinitiatoren in einem Polybutadien- bzw. Butadien-Copolymerisat-Latex hergestellt werden.

Die Verfahren zur Herstellung von ABS-Pfropfpolymerisaten sind bekannt.

Die Herstellung der erfindungsgemässen Formmassen kann in den üblichen Mischaggregaten wie Walzen, Kneter, Ein- und Mehrwellenextruder erfolgen. Besonders geeignet sind Doppelwellenextruder.

Die Mischungen können auf den genannten Mischaggregaten hergestellt werden, indem die beiden Komponenten A und B gemeinsam aufgeschmolzen und homogenisiert werden, oder indem das Pfropfpolymerisat B in die Schmelze des Polybutylenterephthalats A eingearbeitet wird.

Die Temperatur bei der Herstellung der Mischungen sollte mindestens 10 °C oberhalb des Schmelzpunktes des Polybutylenterephthalats A und unterhalb 300 °C, vorzugsweise zwischen 245 und 270 °C liegen.

Die erfindungsgemässen Formmassen können übliche Additive, wie Gleit- und Entformungsmittel, Nukleiermittel, Stabilisatoren, Füll- und Verstärkungsstoffe, Flammschutzmittel sowie Farbtoffe enthalten. Die Zusatzstoffe werden vorzugsweise bei der Compoundierung in reiner Form oder als Konzentrate zugesetzt.

Die erfindungsgemässen Formmassen zeichnen sich bei niedrigen Gehalten an Pfropfpolymerisat B durch eine erhebliche Verbesserung der mehraxialen Schlagzähigkeit aus. Überraschend ist auch die hohe Fliessnahtfestigkeit. Darüber hinaus zeichnen sich die Formmassen durch eine hohe Wärmeformbeständigkeit aus.

Entsprechend dem Eigenschaftsprofil können die erfindungsgemässen Formmassen daher überall im Spritzguss- und Extrusionssektor dort eingesetzt werden, wo hohe Wärmeformbeständigkeit und hohe Zähigkeit gefordert werden, z.B. bei temperaturbelasteten Haushaltsgeräten, Karosserieteilen, Büromaschinen-Bauteilen.

Die in den nachfolgenden Beispielen genannten Teile sind Gewichtsteile.

Beispiele 1-8

Auf einer kontinuierlich arbeitenden Zweiwellenmaschine der Firma Werner & Pfleiderer (Typ ZSK 32) wurde Polybutylen-terephthalat mit einer Intrinsic-Viskosität von 0,95 dl/g aufgeschmolzen. Durch einen zweiten Einfüllstutzen wurde das ABS-Pfropfpolymerisat in die PBT-Schmelze eindosiert. Stickstoffbeschleierung ist zweckmässig. Das Pfropfpolymerisat wurde aufgeschmolzen und im Polybutylenterephthalat homogen verteilt. Es kann vorteilhaft sein, die Schmelze vor dem Austritt aus der Düse zu entgasen. Die Zylindertemperaturen wurden so eingestellt, dass eine Massetemperatur von 255 °C gewährleistet war. Der Schmelzstrang der Mischung aus Polybutylenterephthalat und Pfropfpolymerisat wurde in Wasser abgekühlt, granuliert und getrocknet.

Zur Herstellung des Pfropfpolymerisats wurden nach dem Verfahren der Emulsionspolymerisation gemäss Angaben von DE-AS 1 247 665 und DE-AS 1 269 360 die in der Tabelle angegebenen Anteile an Acrylnitril und Styrol auf 65-80 Teile eines grobteiligen vernetzten Kautschuks mit einem mittleren Teilchendurchmesser ($d_{50}$) der in Latexform vorliegenden Polybutadienpfropfgrundlage von 0,4 $\mu$m und einem Gelanteil von 85% aufgepfropft.

Vom Granulat wurden auf einer üblichen Spritzgussmaschine bei 260 °C Normkleinstäbe (nach DIN 53 453) und Platten von 3 $\times$ 60 $\times$ 60 mm verspritzt.

Geprüft wurde die Schlagzähigkeit und Kerbschlagzähigkeit (nach DIN 53 453), Kugeldruckhärte (nach DIN 53 456), Wärmeformbeständigkeit nach Vicat (nach DIN 53 460) sowie die mehraxiale Schlagzähigkeit im EKWA-Test (DIN 53 443, Blatt 2, Durchschlagung einer Platte von 3 × 60 × 60 mm mit einem Gewicht von 35 kg mit einem Durchstossdorn mit kugelförmiger Spitze, Durchmesser 20 mm, bei einer Fallhöhe von 1 m). Die Fliessnahtfestigkeit wurde im Zugversuch (nach DIN 53 455) an zweiseitig angespritzten Zugstäben geprüft.

Tabelle

| Beispiele | Pfropfpolymerisat Anteil in PBT-Mischung % | Anteil Polybutadien im Pfropfpolymerisat % | Anteil in Pfropfhülle Acrylnitril % | Styrol % | G | Kerbschlagzähigkeit kJ/m² | Kugeldruckharte MPa | Wärmeformbeständigkeit °C | EKWA-Test Zahl der Zähbrüche % |
|---|---|---|---|---|---|---|---|---|---|
| 1 | 20 | 65 | 28 | 72 | 0,35 | 8,8 | 88 | 134 | 100 |
| 2 | 30 | 65 | 28 | 72 | 0,35 | 16,3 | 72 | 117 | 100 |
| 3 | 20 | 80 | 28 | 72 | 0,20 | 28 | 78 | 142 | 100 |
| 4 | 30 | 80 | 28 | 72 | 0,20 | 38 | 60 | 113 | 100 |
| PBT (Vergleich) | – | – | – | – | | 3,5 | 115 | 175 | 40 |

Der Schlagzähigkeitstest ergab für die Proben aller Beispiele das Ergebnis «nicht gebrochen». Die Fliessnahtfestigkeit* für alle Proben lag bei 100 %.

Abkürzung: EKWA = Elektronische Kraft/Weg-Aufnahme

$$^{*}\frac{\text{Reissfestigkeit mit Fliessnaht} \cdot 100}{\text{Reissfestigkeit ohne Fliessnaht}}$$

## Patentansprüche

1. Hochschlagzähe Polybutylenterephthalat-Formmassen, bestehend aus Mischungen aus
   A. 70-80Gew.-% Polybutylenterephthalat und
   B. 20-30 Gew.% ABS-Pfropfpolymerisat, wobei sich die obigen Prozentangaben auf die Summe A + B beziehen und das Pfropfpolymerisat B durch Pfropfreaktion von
      I. 10-40 Gew.-%, bezogen auf B, eines Gemisches aus
         a) 10-35 Gew.-%, bezogen auf die Summe a + b, Acrylnitril und
         b) 65-90 Gew.-%, bezogen auf die Summe a + b, Styrol auf
      II. 60-90 Gew.-%, bezogen auf B, eines vernetzten Butadien-Polymerisats mit mindestens 70 Gew.-%, bezogen auf II, Butadienresten als Pfropfgrundlage erhältlich ist,

   dadurch gekennzeichnet, dass der Gelanteil der Pfropfgrundlage II $\geqq$ 80% (in Toluol gemessen), der Pfropfgrad G 0,15-0,55 und der mittlere Teilchendurchmesser $d_{50}$ des ABS-Pfropfpolymerisats B 0,4 µm betragen.

2. Formmassen nach Anspruch 1, dadurch gekennzeichnet, dass das Pfropfpolymerisat B durch Pfropfreaktion von 10-35 Gew.-% I auf 65-90 Gew.-% II erhältlich ist.

3. Formmassen nach Anspruch 2, dadurch gekennzeichnet, dass das Pfropfpolymerisat B durch Pfropfreaktion von 15-25 Gew.-% I auf 75-85 Gew.-% II erhältlich ist.

4. Formmassen nach Ansprüchen 1-3 dadurch gekennzeichnet, dass die Pfropfmonomeren I zu 20-35 Gew.-% aus Acrylnitril und zu 65-80 Gew.-% aus Styrol bestehen.

5. Formmassen nach Ansprüchen 1-4 dadurch gekennzeichnet, dass sie 5-50 Gew.-% Glasfasern (bezogen auf die Summe von A + B + Glasfasern) enthalten.

## Claims

1. High-impact polybutylene terephthalate moulding compositions, consisting of mixtures of

A. 70 - 80 % by weight of polybutylene terephthalate and

B. 20 - 30 % by weight of ABS graft polymer, the above percentages being based on the sum of A + B and the graft polymer B being obtainable by a grafting reaction of

I. 10 - 40 % by weight, based on B, of a mixture of

a) 10 - 35 % by weight, based on the sum of a + b, of acrylonitrile and

b) 65 - 90 % by weight, based on the sum of a + b, of styrene onto

II. 60 - 90 % by weight, based on B, of a cross-linked butadiene polymer containing at least 70 % by weight, based on II, of butadiene residues as the graft base,

characterised in that the gel content of the graft base II is ≧ 80 % (as measured in toluene), the degree of grafting G is 0.15 - 0.55 and the average particle diameter $d_{50}$ of the ABS graft polymer B is 0.4 $\mu$m.

**2.** Moulding compositions according to Claim 1, characterised in that the graft polymer B is obtainable by a grafting reaction of 10 - 35 % by weight of I onto 65 - 90 % by weight of II.

**3.** Moulding compositions according to Claim 1, characterised in that the graft polymer B is obtainable by a grafting reaction of 15 - 25 % by weight of I onto 65 - 80 % by weight of II.

**4.** Moulding compositions according to Claims 1 - 3, characterised in that 20 - 35 % by weight of the graft monomers I consist of acrylonitrile and 65 - 80 % by weight of the graft monomers I consist of styrene.

**5.** Moulding compositions according to Claims 1 - 4, characterised in that they contain 5 - 50 % by weight of glass fibres (based on the sum of A + B + glass fibres).

**Revendications**

**1.** Matières à mouler en téréphthalate de polybutylène de haute résilience, consistant en mélanges de

A. 70 - 80 % en poids de téréphthalate de polybutylène et

B. 20 - 30 % en poids de polymère greffé ABS, les pourcentages ci-dessus étant rapportés à la somme A + B et le polymère greffé B étant obtenu par la réaction de greffage de

I. 10 - 40 % en poids, par rapport à B, d'un mélange de

a) 10 - 35 % en poids, par rapport à la somme A + B, d'acrylonitrile et

b) 65 - 90 % en poids, par rapport à la somme A + B, de styrène, sur

II. 60 - 90 % en poids, par rapport à B, d'un polymère de polybutadiène réticulé contenant au moins 70 % en poids, par rapport à II, de restes butadiène, comme support de greffe,

caractérisées en ce que la teneur en gel du support de greffe II est ≧ 80 % (mesurée dans le toluène), le degré de greffage G est 0,15 - 0,55 et le diamètre moyen de particules $d_{50}$ du polymère greffé ABS B est de 0,4 $\mu$m.

**2.** Matières à mouler selon la revendication 1, caractérisées en ce que le polymère greffé B est obtenu par réaction de greffage de 10 - 35 % en poids de I sur 65 - 90 % en poids de II.

**3.** Matières à mouler selon la revendication 1, caractérisées en ce que le polymère greffé B est obtenu par réaction de greffage de 15 - 25 % en poids de I sur 75 - 85 % en poids de II.

**4.** Matières à mouler selon les revendications 1 - 3, caractérisées en ce que les monomères greffés I consistent en 20 - 35 % en poids d'acrylonitrile et 65 - 80 % en poids de styrène.

**5.** Matières à mouler selon les revendications 1 - 4, caractérisées en ce qu'elles contiennent 5 - 50 % en poids de fibres de verte (par rapport à la somme A + B + fibres de verre.